Europäisches Patentamt

**(19)** European Patent Office

Office européen des brevets

**(11)** Publication number: **0 216 515**
**A2**

**(12)** EUROPEAN PATENT APPLICATION

**(21)** Application number: **86306529.8**

**(22)** Date of filing: **22.08.86**

**(51)** Int. Cl.⁴: **H 04 M 3/42**
**H 04 M 3/50**

**(30)** Priority: **17.09.85 US 776913**

**(43)** Date of publication of application:
**01.04.87 Bulletin 87/14**

**(84)** Designated Contracting States:
**AT BE CH DE FR GB IT LI LU NL SE**

**(71)** Applicant: **VOICETEK CORPORATION**
**61 Chapel Street**
**Newton Massachusetts 02161(US)**

**(72)** Inventor: **Wolf, Sherman**
**369 Boston Post Road**
**Amherst New Hampshire(US)**

**(74)** Representative: **Allsop, John Rowland et al,**
**Rowland Allsop & Co. Black Boy Yard 15 High Street**
**West Wycombe High Wycombe, Bucks. HP14 3AE(GB)**

**(54)** Method of and apparatus for connecting remote users of a telephone trunk interface and the like.

**(57)** A method of and apparatus for notifying a remote subscriber of a caller's attempted communication by a communication system accepting and recognizing a call for a subscriber, paging the subscriber, and connecting the original caller to the subscriber's telephone line when the subscriber calls the system in answer to the page. Other features include recording a caller message for the subscriber if the subscriber calls back to the system after the original caller has disconnected.

*FIG. 1.*

EP 0 216 515 A2

Croydon Printing Company Ltd.

METHOD OF AND APPARATUS FOR CONNECTING REMOTE USERS OF

A TELEPHONE TRUNK INTERFACE, OR THE LIKE

The present invention relates to a method of and apparatus for connecting a remote caller with a remote subscriber through a common telephone trunk interface or the like when the caller cannot reach the subscriber by more common direct calling means. More specifically, the invention is directed to a method of and apparatus for inter-connecting a telephone or other line switch, a paging terminal, a host computer and and a voice recording apparatus.

Included in the present state of the art in remote call notification is the paging system. If a remote caller can not reach a paging system subscriber by normal telephonic means, such as calling all telephone numbers known to be used by the subscriber, the caller can call the paging services of the subscriber. At the paging service, an operator requests the name of the subscriber and places a page over a radio common carrier (RCC). The operator will also take a message, generally to include the name and current telephone number of the caller. The subscriber, who must carry a radio receiver, generally called a "beeper", upon hearing the beep or page

-2-

from the service, calls the service by normal telephonic means to receive the message left by the caller from the operator.

More sophisticated systems allow the RCC to signal the beeper and transfer the caller's current telephone number to a display on the beeper. Such telephone number transferance allows the subscriber a shorter response time to contact the original caller as the intermediary call to the service operator is obviated; but this generally severely limits the capacity of the RCC's radio channel.

Other means of remote notification include less timely message systems. In such a message system, a caller calls the subscribers's message service if unable to reach the subscriber. The caller leaves a message including return call telephone numbers and must wait until the subscriber calls in to the message service to receive notification of a previous call. Such message systems can be monitored by an operator and may use analog or digital storage means.

Another modification of the message system allows a caller to leave a message with an operator or programmed digital storage system. The operator or system, having a list of numbers by which the subscriber may be contacted, will then attempt to contact the subscriber to deliver the original caller's message. After the message is delivered, either by the operator contacting the subscriber, the subscriber calling in for messages, or by transmitting to the subscriber's paging beeper the caller's number, as mentioned previously, the subscriber must then make a separate attempt to return the call to the caller. During such wait for a subscriber's return call, the caller normally can not even determine if or when the subscriber has been notified of the original attempted communication.

It is therefore an object of the present invention to provide a new and improved method of and appartus for notifying a remote subscriber of a caller's attempted communication and allowing the subscriber to connect directly to the caller's original call.

Another object is to provide a method and apparatus for providing useful messages to the caller, such as varifying to the caller that notification has been given to the subscriber that the caller is attempting communication.

A further object is to provide a message storage facility in the event the subscriber does not rapidly answer the page, so that later return communication can be initiated by the subscriber.

Other and further objects will be explained hereinafter and are more particularly delineated in the appended claims.

-4-

In summary, however, from one of its broader aspects, the invention contemplates a method of notifying and connecting a remote subscriber of and to a caller's attempted communication in a telephone communication system having a telephone trunk inerface connected with a host computer programmed to operate the interface with a switching system, a radio common carrier terminal and a voice processing system, said method comprising, accepting through the switching system a caller's call and verifying the same for relay to a valid remote subscriber; thereupon paging the subscriber by way of the radio common carrier terminal; and, upon the subscriber answering the page within a preselected time, directly connecting the subscriber to the caller through the said interface under control of said host computer. Preferred details and best mode structures are hereinafter more particularly described.

The invention will now be described with reference to the accompanying drawings in which:

Fig. 1 is a schematic representation of a message system used in the present invention; and

Fig. 2 is a flowchart diagram describing the general call protocol of the message system.

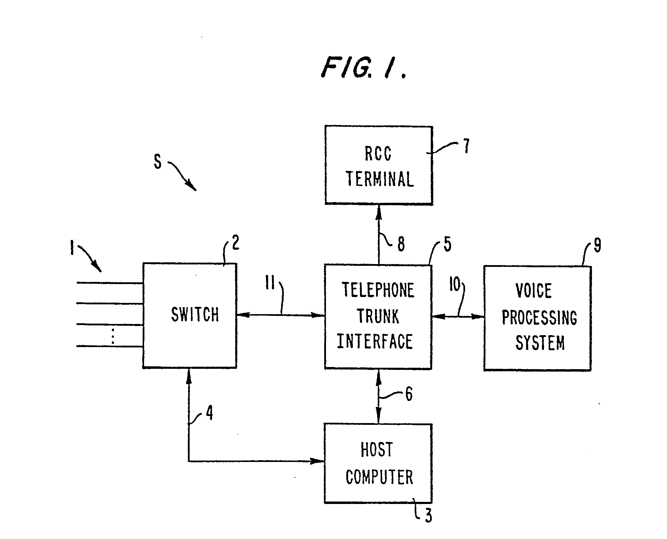

In the embodiment of Fig. 1, a message system S is shown for use in accordance with the present invention. Each subscriber is assigned a unique "call-in" number and a unique "call-back" number. A caller wishing to reach the subscriber calls the call-in number. A telephone company trunk line 1 (Telco Trunk) carries the in-coming call to a switch 2 such as the Modular Switching Peripheral (MSP) manufactured by Redcom Corporation, Rochester, N.Y.

The switch 2 passes the number being called in (DID System) to a host computer 3 using, for example, an RS232-C line 4. A suitable digital signal processing host computer 3 is the Digital Equipment Corporation Micro 11. The host computer 3 instructs a telephone trunk interface unit 5, such as a VTK 51 of the assignee of the present invention, VoiceTek Corporation, along a RS232-C line 6, to contact the radio common carrier (RCC) 7, such as the "Zip Call" type marketed by that company of Brighton, Massachusetts.

The interface 5 is connected to the RCC 7 by a paging terminal line 8, which may be a dedicated line, a telephone line or any other suitable connection line. The host computer 3 passes on to the RCC 7, through the interface 5, the identification number of the subscriber and the RCC 7 puts out a radio page to be accepted by the subscriber's beeper.

When the subscriber calls back through the trunk lines 1, using the call-back number, the switch 2 passes the number to the host computer 3 which matches it with the waiting call-in number and instructs the switch 2 to connect the

-6-

Telco Trunk 1 carrying the caller's call-in with the Telco Trunk 1 carrying the subscriber's call-back.

The system S is also enhanced by the addition of a voice storage and processing system (VPS) 9, such as a Voice-Tek Corporation VS30. The VPS 9 provides spoken prompts to the caller, such as to wait for the subscriber to call back or to leave a message, along voice path audio lines 10 and 11, and through the interface 5, and allows the caller to leave a spoken message for later recall by the subscriber if the subscriber can not reach a telephone to call back within a preselected time after receiving the page. The subscriber can also access such messages by calling the system S using the call-back number when no one is trying to reach the subscriber.

When used with the Voicetek VS30 system, the voice processing system (VPS) 9 is instructed to provide a message to the caller stating, "The subscriber is being paged, please wait until he can reach a phone." If the subscriber does not call back within a predetermined period (for instance, one minute), the VPS 9 is instructed to issue a second prompt, "Subscriber cannot reach a phone just now, please leave a message." Such messages may be prerecorded in the voice of the subscriber. The VPS 9 then records the caller's message, which can be retrieved by the subscriber when he can reach a telephone and call-back, as noted above.

The system S also provides a unique feature beyond the standard hardware described above and the programing required for the host computer 3. RCC terminals 7 provide a verifying signal to the caller indicating that the page has been placed. It is imperative for the system S to recognize this verifying signal before continuing service. Or, in the absence of the verifying signal, a message is provided to the caller, "I'm sorry; we cannot page subscriber, please leave a message." The verifying signal is typically a one second, 2000 Hz tone placed on the paging terminal line 8 by the RCC terminal 7. The switch 2 has no way of recognizing such a signal. The interface 5, however, is capable of recognizing the signal tone passed through the line 5 and signaling the host computer 3 through line 6 that the page has (or has not) been placed. Once the host computer 3 determines that the page has (or has not) been placed by the RCC 7, the paging terminal line 8 is released and is available to service the next call-in.

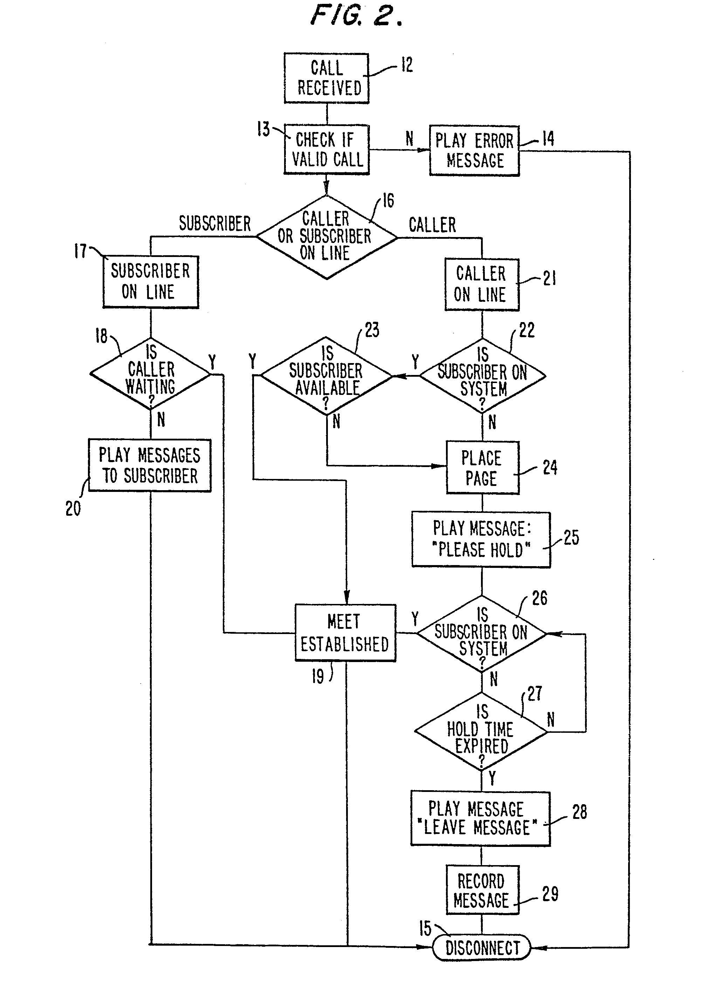

Turning now to Fig. 2, a flow chart is shown for the general call protocol of the message systems S, using the equipment of Fig. 1. When a call is received at 12 on the trunks 1, the switch 2 under control of the host processor 3, determines or checks if it is a valid call at 13, so as to avoid wrong numbers, etc. If the call is not valid, an error message is played at 14 and the caller is disconnected at 15, by the switch 2.

If the call is valid, however, a determination is made as to whether the call is from a caller or subscriber at 16 by the host processor 3, based on the unique call number. If a subscriber is on-line at 17, a check is made at 18 to determine if a caller is waiting. If a caller is waiting, as determined by the host computer 3, a "meet" is established at 19 when the switch 2 is instructed by the host computer 3 to connect the caller and subscriber trunk lines 1 until the connection is finished, such as signaled by the caller or subscriber "hanging-up", at which time the "meet" is disconnected at 15. If no caller is waiting, the subscriber has any waiting messages delivered at 20 by audio signal from the VPS 9 through the audio lines 10 and 11 and the interface 5, as previously discussed, and under the direction of the host computer 3. The messages may be automatically delivered or may require commands or identifications, interpreted by the host computer 3, to permit message delivery. After all messages have been delivered the call is disconnected at 15.

Returning to the identity of the person on-line at 16, if a caller is on line at 21, a check is made at 22 to see if the subscriber is on the system S at that time. If the subscriber is on the system and available, a check being made at 23 to see if the subscriber is busy with another call, then again, a "meet" is established at 19. If the subscriber is not on the system at 22 or not available at 23, however, a

-9-

page is placed by the RCC, as described previously, at 24. Alternatively, if the subscriber is not available at 23, the caller may be asked to wait for the subscriber to become available or leave a message, as mentioned previously, and as now more fully described.

After a page has been placed at 24, a message is played to the caller at 25 from the VPS 8 requesting the caller to wait for the subscriber to call in. The message may also include a message that a page has been successfully placed. After the initiation of the message at 25, the host processor 3 determines if the subscriber is on the system S at 26 until the preselected hold time has expired at 27. If the subscriber does enter the system S before the hold time is up, as at 27, a "meet" is established; if not, a "leave message" request is played from the VPS 9 at 28 and a caller message is recorded on the VPS 9 at 29 before the system disconnects the caller at 15.

Further modifications will also occur to those skilled in the art, and such are considered to fall within the spirit and scope of the invention as defined in the appended claims.

-10-

## CLAIMS

1.  A method of notifying a remote subscriber of a caller's attempted communication that comprises, receiving a call from the caller; obtaining an identification number of a remote subscriber from the caller; switching the call to a host computer that is programmed to instruct a radio common carrier to page the subscriber; notifying the subscriber of the caller's attempted communication by paging the subscriber; and directly connecting the remote subscriber responding to the page to the caller's original call.

2.  A method as claimed in claim 2 and in which the direct connecting is effected by the remote subscriber receiving the page of the radio common carrier, calling the host computer and providing thereto the subscriber's identification number, and thereupon switching into direct connection, under direction of the host computer and the subscriber.

3.  A method as claimed in claim 1 and in which a message from the caller is stored during the call for the subscriber following paging the subscriber upon the caller's attempted communication.

-11-

4. A method as claimed in claim 3 and in which the storing is effected by by causing the host computer to switch the call to a voice recording means after instructing the radio common carrier to page the subscriber.

5. A method as claimed in claim 1 and in which instructive messages are communicated to the caller during the call by the host computer.

6. A method as claimed in claim 5 and in which the instructive messages include verification that the subscriber has been paged.

7. A method of notifying and connecting a remote subscriber of and to a caller's attempted communication in a telephone communication system having a telephone trunk interface connected with a host computer programmed to operate the interface with a switching system, a radio common carrier terminal and a voice processing system, said method comprising, accepting through the switching system a caller's call and verifying the same for relay to a valid remote subscriber; thereupon paging the subscriber by way of the radio common carrier terminal; and, upon the subscriber answering the page within a preselected time, directly connecting the subscriber to the caller through the

-12-

said interface under control of said host computer.

8. A method as claimed in claim 7 and in which, the caller is notified that the subscriber has been paged; and upon the failure of the subscriber to answer the page by telephone within said preselected time, storing the caller's message in said voice processing system and disconnecting the caller; and, upon the subscriber's ultimate response after the caller has been disconnected, delivering the stored message to the subscriber.

9. Apparatus for notifying and connecting a remote subscriber of and to a caller's attempted communication in a telephone communication system having a telephone trunk interface connected with a host computer programmed to operate the interface with telephone line switching means, radio common carrier means and voice processing means, said apparatus having, in combination,

0216515

-13-

means operable through said switching means from receiving a caller's call and verifying the same for relay to a valid remote subscriber; means for thereupon paging the subscriber by way of said radio common carrier means; means for notifying the caller that the page has been made; and, upon the subscriber answering the page by telephone connecting with said switching means, within a preselected time, means for directly connecting the subscriber to the caller through said interface under the control of the host computer to permit direct telephone contact between the subscriber and caller.

10. Apparatus as claimed in claim 9 and in which means is provided, operable upon the failure of the subscriber to answer the page by telephone within said preselected time, for instructing the caller to, and effecting the store of, a message from said caller by said voice processing means and means for thereafter disconnecting the caller; and means operable when the subscriber establishes telephone connection, for delivering the stored message to the subscriber.

0216515

## FIG. 1.

0216515

# FIG. 2.